# EUROPEAN PATENT APPLICATION

(11) **EP 4 837 887 A1**
(43) Date of publication of application: **11.11.2026**
(21) Application number: 25170692.5
(22) Date of filing: 15.04.2025
(51) Int. Cl.: C03B 5/03, C03C 3/087, C03C 3/078

(54) **GLASS MANUFACTURING PROCESS USING BURNT RAW MATERIALS AS CALCIUM AND/OR CALCIUM-MAGNESIUM SOURCE IN A HIGH-CAPACITY FURNACE**

(71) Applicant: S.A. LHOIST RECHERCHE ET DEVELOPPEMENT, 1342 Ottignies-Louvain-la-Neuve (BE)
(72) Inventor: CARLEER, Pierre, 1410 Waterloo (BE); LORGOUILLOUX, Marion, 7110 Strépy Bracquegnies (BE); CRINIERE, Guillaume, 1420 Braine-l'Alleud (BE)
(74) Representative: Calysta NV

(57) **Abstract**

The invention relates to a glass manufacturing process comprising a step of melting a glass batch by heating at least partially with electricity in a glass furnace with a capacity higher than 250 tons/day; said glass batch comprising at least one calcium or calcium-magnesium oxide source: quicklime and/or dolime; optionally, at least one calcium or calcium-magnesium carbonate source: limestone and/or dolomite; and free water; the ratio of oxides in the batch compared to carbonates being adjusted based on the electrical input fraction at the melting step and on amount of free water.

## Description

### Technical Field

The present invention is in the context of the glass industry and, in particular, in the domain of glass manufacturing which includes melting a glass batch (i.e., a mixture of raw materials) in a glass furnace following by a fining in order to produce glass articles, like glasswares, glass sheets or glass containers.

In particular, the invention relates to a glass manufacturing process that allows reducing CO₂ emissions (lower CO₂ footprint) occurring, on the one hand, from energy consumption and, on the other hand, from raw materials decomposition, while avoiding or greatly limiting any dust issue of the glass batch and while allowing the use of a glass furnace with high capacity.

### Prior art

Glass articles, in particular silicious or soda-lime glass articles, are made commonly by melting at high temperatures (e.g. 1200-1500°C) a glass batch comprising mainly silica sand, limestone (i.e. calcium carbonate) and/or dolomite, sometimes called dolostone (i.e. calcium-magnesium carbonate), and soda ash (i.e. sodium carbonate). Depending notably on the glass furnace, the targeted properties and use of the final glass produced, the glass batch comprises these main raw materials in variable amounts and generally, it also comprises other raw materials in smaller amounts like, for example, potassium, aluminum and/or boron source(s), colorants (e.g., metal oxides) and additive(s) (coke, sulphates,...). Cullet in variable amounts may also be combined with the raw materials.

As conventional glass melting processes have used for decades essentially carbonates as sources of sodium, calcium and magnesium, glass industry is considered as an important direct emitter of CO₂ occurring from the decarbonization/decomposition of these raw materials during melting at high temperatures.

Next to that, the glass manufacturing process is also greatly energy-demanding, to melt the solid glass batch and maintain the melt at high temperatures for fining, thereby generating also CO₂ emissions (occurring from energy consumption).

Though, the global warming, the requirements for CO₂ emissions reduction, CO₂ taxes and the energy prices have put more and more pressure on glass manufacturers and represent a current or future threat for the glass business competitivity. In that context, the glass industry has invested a lot since years in developments and actions in order to reduce energy consumption and/or CO₂ emissions of its manufacturing processes.

One of the levers identified to reduce the CO₂ emissions per ton of produced glass relies on the use of alternative raw materials, in particular the replacement of carbonates by corresponding decarbonated materials. In particular, it is an obvious option to replace limestone (i.e. calcium carbonate) by its corresponding oxide (quicklime, i.e. CaO) and also, but in a lesser extent, to replace dolomite (i.e. calcium-magnesium carbonate) by its corresponding oxide (dolime, i.e. CaO.MgO).

Replacing limestone by quicklime (or dolomite by dolime, or both) in a glass batch may at first sight not seem to be a solution to reduce CO₂ emissions as the CO₂ from the limestone and/or dolomite will anyway be released, as quicklime and dolime are manufactured by burning limestone and dolomite respectively, in a furnace called commonly "lime kiln" where the carbonates are converted into oxides and CO₂. However, it is known in the art that the energy efficiency of a lime kiln is significantly higher than that of a glass furnace, meaning that the energy required to decompose 1 ton of limestone or dolomite will be lower in a lime kiln than in a glass furnace, which implies consequently less CO₂ emissions coming from energy consumption (e.g. from fuels).

Moreover, it appears that the melting kinetics of a glass batch made with quicklime and/or dolime as calcium and/or calcium-magnesium source is increased compared to that of a glass batch made with limestone and/or dolomite. This means that, in a given glass furnace at a given temperature, the pull can be increased and therefore, the energy consumption as well as the CO₂ emitted per ton of glass can be decreased.

Nevertheless, replacing limestone by quicklime and/or dolomite by dolime in a glass batch leads to other issues, particularly related to their reactivity with water.

The main advantage with the use of limestone and/or dolomite as calcium and/or calcium-magnesium source in a glass batch, next to their low costs, is the fact that these products have high densities and show rather coarse grains (up to 3 or even 5 mm) and therefore emit very limited amounts of dust during handling, mixing with the other glass batch raw materials, transport through conveyors, introduction in the furnace, etc.

Moreover, limestone and dolomite are inert in the presence of water, meaning that if the glass manufacturer anyhow wishes to further decrease dust emissions, the batch can be moisturized without any issue (in particular, without any disturbing chemical reactions). Glass batch moisturization is indeed a very common practice to reduce dust emissions in the glass industry (and also avoid segregation during batch storage). Dust has indeed to be avoided as much as possible in a glass plant for different reasons. Pilling up of dust in the glass furnace heat exchangers reduces thermal efficiency of the furnace and thus increases fuel consumption and CO₂ emissions. It reduces also the lifetime of the refractories, especially in the heat exchanger where they pile, as they can in some cases chemically react with those refractories. Dust means also that some part of the raw materials that were supposed to end up in the batch are actually lost as dust, which changes the glass composition. Finally, dust is obviously to be avoided for operators' safety.

Unfortunately, water and quicklime (or dolime) react together exothermically, which results in a release of heat that makes the batch difficult to handle. Moreover, this hydration reaction generates calcium (or calcium-magnesium) hydroxide particles that have a smaller granulometry than the initial oxides and leads therefore to the generation of additional fine particles and increased dust emissions. Moreover, the lime (and/or dolime) hydration reaction consumes water that is therefore not present anymore as free moisture in the batch, and that can thus not play its role of dust suppressant for the other raw materials in the batch.

Despite the above-exposed drawbacks of using quicklime and/or dolime as calcium and/or calcium-magnesium source in a glass batch, those burnt products have already been used in the art, but only in specific situations and exclusively in small glass furnaces (i.e. with low capacity).

Indeed, only small glass furnaces that produce glass fibers or "special glass" (with a typically low capacity, up to 80 tons/days but generally around 50 tons/day) currently use in practice quicklime or dolime as such furnaces have low volumes of combustion gases and therefore have less turbulences and less batch carryover than large furnaces. Thanks to these low level of gas/fumes turbulences, moisturizing the batch to reduce dust emissions is not required in such low-capacity furnaces, making the use of quicklime and/or dolime possible without the above cited issues.

On the contrary, due to high turbulences, existing large glass furnaces with high capacity (typically above 150 tons/day and up to 1000 tons/day) cannot fully substitute unburnt by burnt products as calcium and/or calcium-magnesium sources, because they still need moisturized batch in order to avoid or limit dust. Such high-capacity furnaces are those used commonly for producing flat glass or container/hollow glass. For flat glass, typical capacity is above 400 tons/day, generally 500 to 700 tons/day and even (for some of them) above 700 t/day. For container glass, typical capacity is above 300 tons/day.

Therefore, in the current environmental and economical situation linked to energy and CO₂ emissions, there is still a need in the glass industry for a glass manufacturing process using a large glass furnace (i.e. high capacity) and having lowered CO₂ footprint compared to classical large glass furnaces, especially reduced CO₂ emissions occurring from raw materials decomposition but also from energy consumption, while having little or no issue regarding glass batch dust and/or reactivity.

### Objectives of the invention

The present invention has notably the objective of overcoming the cited drawbacks of the prior art.

More precisely, an objective of the invention is to provide a glass manufacturing process using a large glass furnace (i.e. with a high capacity) and having lowered CO₂ footprint compared to classical large glass furnaces.

Another objective of the invention is to provide such a glass manufacturing process in which CO₂ emissions occurring from raw materials decomposition are reduced while maintaining low dust emissions.

Another objective of the invention is to provide such a glass manufacturing process in which CO₂ emissions occurring from energy consumption are (also) reduced.

Another objective of the invention is to provide such a glass manufacturing process in which energy efficiency is increased and kinetics of said process are improved, thereby reducing CO₂ emissions occurring from energy consumption.

Finally, another objective of the invention is to provide a solution to the disadvantages of the prior art that is simple and cheap to implement and use.

### Description of the invention

The present invention relates to a glass manufacturing process comprising steps of melting a glass batch and fining a glass melt in a glass furnace, said step of melting being carried out by heating at least partially with electrical heating means with an electrical input fraction EIF defined as the ratio (electricity input/total energy input at the melting step) in the range 0.05- 1; said glass batch comprising:
- at least one calcium or calcium-magnesium source chosen amongst oxide sources : quicklime and dolime;
- optionally, at least another calcium or calcium-magnesium source chosen amongst carbonate sources : limestone and dolomite;
- free water in an amount between 0 and 5 wt%;
characterized in that said process produces glass products with a capacity higher than 250 tons/day, and that the amount ratio [OS/(OS+CS)] in said glass batch is adjusted based on the electrical input fraction in the melting step and on the amount of free water in said glass batch, as follows :
- if EIF = 1 : [OS/(OS+CS)] is from 0.45 to 0.69 ;
- if EIF < 1 and FW < 3 wt% : [OS/(OS+CS)] is from 0.45 to 0.69 ;
with OS being the weight amount of said oxide source(s) in said glass batch, CS being the weight amount of said carbonate source(s) in said glass batch and FW being the weight amount of free water in said glass batch.

In a prefered embodiment of the present invention, said amount ratio [OS/(OS+CS)] in the glass batch is adjusted based on the electrical input fraction at the melting step and on the amount of free water in said glass batch, as follows:
- if EIF = 1 : [OS/(OS+CS)] is chosen in the group comprising 0.46, 0.47, 0.48, 0.49, 0.50, 0.51, 0.52, 0.53, 0.54, 0.55, 0.56, 0.57, 0.58, 0.59, 0.60, 0.61, 0.62, 0.63, 0.64, 0.65, 0.66, 0.67 and 0.68.

In particular, if EIF = 1, said amount ratio [OS/(OS+CS)] is for example 0.45, 0.46, 0.47, 0.48, 0.49, 0.50, 0.51, 0.52, 0.53, 0.54, 0.55, 0.56, 0.57, 0.58, 0.59, 0.60, 0.61, 0.62, 0.63, 0.64, 0.65, 0.66, 0.67, 0.68 or 0.69.

In another prefered embodiment of the present invention, said amount ratio [OS/(OS+CS)] in the glass batch is adjusted based on the electrical input fraction at the melting step and on the amount of free water in said glass batch, as follows :
- if EIF < 1 and FW < 3 wt% : [OS/(OS+CS)] is chosen in the group comprising 0.46, 0.47, 0.48, 0.49, 0.50, 0.51, 0.52, 0.53, 0.54, 0.55, 0.56, 0.57, 0.58, 0.59, 0.60, 0.61, 0.62, 0.63, 0.64, 0.65, 0.66, 0.67 and 0.68.

In particular, if EIF < 1 and FW < 3 wt%, said amount ratio [OS/(OS+CS)] is for example 0.45, 0.46, 0.47, 0.48, 0.49, 0.50, 0.51, 0.52, 0.53, 0.54, 0.55, 0.56, 0.57, 0.58, 0.59, 0.60, 0.61, 0.62, 0.63, 0.64, 0.65, 0.66, 0.67, 0.68 or 0.69. More particular, said glass batch of said process according to the invention, comprises free water (FW) in an amount below 0.5 wt%, preferably below 0.3 wt%.

The present invention also relates to a glass manufacturing process comprising steps of melting a glass batch and fining a glass melt in a glass furnace, said step of melting being carried out by heating at least partially with electrical heating means with an electrical input fraction EIF defined as the ratio (electricity input/total energy input at the melting step) in the range 0.05- 1; said glass batch comprising:
- at least one calcium or calcium-magnesium source chosen amongst oxide sources : quicklime and dolime;
- optionally, at least another calcium or calcium-magnesium source chosen amongst carbonate sources : limestone and dolomite;
- free water in an amount between 5.1 wt% and 7 wt%;
characterized in that said process produces glass products with a capacity higher than 250 tons/day, and that the amount ratio [OS/(OS+CS)] in said glass batch is adjusted based on the electrical input fraction in the melting step and on the amount of free water in said glass batch, as follows :
- if 0.7 ≤ EIF < 1 and FW ≥ 5.1 wt% : [OS/(OS+CS)] is from 0.7 to 1;
- if 0.5 ≤ EIF < 0.7 and FW ≥ 5.1 wt% : [OS/(OS+CS)] is from 0.5 to < 0.7 ;
- if 0.05 ≤ EIF < 0.5 and FW ≥ 5.1 wt% : [OS/(OS+CS)] is < 0.5,
with OS being the weight amount of said oxide source(s) in said glass batch, CS being the weight amount of said carbonate source(s) in said glass batch and FW being the weight amount of free water in said glass batch.

In a preferred embodiment of the invention, said free water (FW) in said glass batch is in an amount chosen in the group comprising 5.2 wt%, 5.3 wt%, 5.4 wt%, 5.5 wt%, 5.6 wt%, 5.7 wt%, 5.8 wt%, 5.9 wt%, 6.0 wt%, 6.1 wt%, 6.2 wt%, 6.3 wt%, 6.4 wt%, 6.5 wt%, 6.6 wt%, 6.7 wt%, 6.8 wt% and 6.9 wt%.

In particular, said free water (FW) in said glass batch is at an amount of 5.1 wt%, 5.2 wt%, 5.3 wt%, 5.4 wt%, 5.5 wt%, 5.6 wt%, 5.7 wt%, 5.8 wt%, 5.9 wt%, 6.0 wt%, 6.1 wt%, 6.2 wt%, 6.3 wt%, 6.4 wt%, 6.5 wt%, 6.6 wt%, 6.7 wt%, 6.8 wt%, 6.9 wt% or 7.0 wt%.

In another preferred embodiment of the invention, the amount ratio [OS/(OS+CS)] in the glass batch is adjusted based on the electrical input fraction at the melting step and on the amount of free water in said glass batch, as follows:
- if 0.7 ≤ EIF < 1 and FW ≥ 5.1 wt% : [OS/(OS+CS)] is from 0.8 to 1;
- if 0.5 ≤ EIF < 0.7 and FW ≥ 5.1 wt% : [OS/(OS+CS)] is from 0.6 to < 0.7 ; and
- if 0.05 ≤ EIF < 0.5 and FW ≥ 5.1 wt% : [OS/(OS+CS)] is from 0.3 to < 0.5.

In still another preferred embodiment of the invention, the amount ratio [OS/(OS+CS)] in the glass batch is adjusted based on the electrical input fraction at the melting step and on the amount of free water in said glass batch, as follows:
- if 0.7 ≤ EIF < 1 and FW ≥ 5.1 wt% : [OS/(OS+CS)] is from 0.9 to 1;
- if 0.5 ≤ EIF < 0.7 and FW ≥ 5.1 wt% : [OS/(OS+CS)] is from from 0.65 to < 0.7; and
- if 0.05 ≤ EIF < 0.5 and FW ≥ 5.1 wt% : [OS/(OS+CS)] is from 0.4 to < 0.5.

Other features and advantages of the invention will be made clearer from reading the following description of preferred embodiments, given by way of simple illustrative and non-restrictive examples.

The invention also relates to the use of quicklime and/or dolime as calcium and/or calcium-magnesium source(s) in a glass furnace to produce glass products with a capacity higher than 250 tons/day, and with an electrical input fraction EIF defined as the ratio (electricity input/total energy input at the melting step) in the range 0.05 - 1.

Hence, the invention is based on a novel and inventive approach. In particular, the inventors have evidenced that, in a glass manufaturing process, by combining (i) a high capacity furnace using electricity as a source of energy to melt the raw materials (the only energy source or combined with another one) and (ii) a specific level of replacement of carbonated Ca and/or Ca-Mg source(s) by its/their corresponding oxide(s) defined based on the used electrical input fraction at the melting step and the level of free moisture in the batch, it is possible, at the same time :
- to get a decrease of the CO₂ emissions occurring from raw materials decomposition;
- to get a decrease of the CO₂ emissions occurring from energy consumption (due to the use of electricity and due to the better energy efficiency and improved melting kinetics of burnt Ca/Mg sources); and
- to avoid or limit the dust issues, despite the use of quicklime and/or dolime in the glass batch.

In the present specification and claims, it is well understood by the person skilled in the art that, as used herein the terms "a", "an" or "the" means "at least one" and should not be limited to "only one" unless explicitly indicated to be the contrary. Also, when a range is indicated, the extremities are included. In addition, all the integral and subdomain values in the numerical range are expressly included as if explicitly written. Also, throughout the specification and claims, the values of content in compositions/glass batches are as percentages by weight, that is to say expressed with respect to the total weight of the concerned composition/glass batch, unless explicitly specified otherwise.

By "glass manufacturing process" and as commonly adopted in the art, it is intended a process that allows manufacturing glass products, through melting and fining of a glass batch comprising raw materials in a glass furnace. The glass manufacturing process of the invention may be used to produce any kind of glass products. For example, it may be used advantageously to manufacture glass products like flat glass (e.g., glass sheets) or hollow glass (e.g., glasswares or glass containers/bottles).

The glass manufacturing process of the invention comprises steps of melting a glass batch and fining a glass melt in a glass furnace. By a "step of melting", it is meant herein and as commonly accepted in the art, a step during which the glass batch (including a mixture of raw materials and, optionally, cullet(s)and water) is melt by heating with heating means, thereby producing a glass melt. By a "step of fining", it is meant herein and as commonly accepted in the art, a step during which the glass melt is treated at temperatures higher than melting temperatures in order to refine the glass (e.g. removing bubbles in the melt). The step of fining in the invention may be carried out using heating means like burners (combustion) and/or electrodes and/or any other suitable heating means.

According to the invention, the process produces glass products with a capacity higher than 250 tons/day, preferably higher than 300 tons/day or even 350 tons/day, more preferably higher than 400, 450 or even 500 tons/day.

In a preferred embodiment of the present invention said process produces glass products with a capacity higher than 300 tons/day, in particular higher than 350 tons/day, preferably higher than 380 tons/day, preferably higher than 400 tons/day, even more preferably higher than 430 tons/day, in particular higher than 450 tons/day, advantageously higher than 480 tons/day, more particular higher than 500 tons/day.

According to the invention, the glass batch comprises:
- at least one calcium or calcium-magnesium source chosen amongst oxide sources : quicklime and dolime;
- optionally, at least another calcium or calcium-magnesium source chosen amongst carbonate sources : limestone and dolomite; and
- free water in an amount between 0 and 5 wt% in the first embodiment of the invention or between 5.1 wt% and 7 wt% in the second embodiment of the invention.

By "limestone", as commonly adopted in the art, it is meant herein a mineral solid material for which the chemical composition comprises mainly calcium carbonate of the formula CaCO₃. It may commonly comprise some impurities (based, for example, on Mg, S, Fe, Mn, Si and/or Al), for example, at a level of from 0.2 to 5 wt%, preferably less than 2 wt%, more preferably less than 1 wt% impurities with respect to the total weight of limestone.

By "dolomite", also called "dolostone", as commonly adopted in the art, it is meant herein a mineral solid material for which the chemical composition comprises mainly calcium and magnesium carbonate of the formula xCaCO₃.yMgCO₃. The molar ratio between Ca and Mg in natural dolomites (x/y) is typically between 0.8 and 1.2. It may commonly also comprise some impurities (based, for example, on S, Fe, Mn, Si and/or Al) for example, at a level of from 0.2 to 5 wt%, preferably less than 2 wt%, more preferably less than 1 wt% with respect to the total weight of dolomite.

By "quicklime", as commonly adopted in the art, it is meant herein a mineral solid material for which the chemical composition is mainly calcium oxide of the formula CaO. Quicklime is usually obtained by calcination of limestone. It may commonly also comprise some impurities based, for example, on Mg, S, Fe, Mn, Si and/or Al. The level of impurities may range from 0.2 to 5 wt%, preferably less than 2 wt%, more preferably less than 1 wt% with respect to the total weight of quicklime. Quicklime contains generally also some % of residual limestone, called unburned residues.

By "dolime", as commonly adopted in the art, it is meant herein a mineral solid material for which the chemical composition is mainly composed of calcium oxide, CaO and magnesium oxide, MgO. Dolime is usually obtained by calcination of dolomite. It may commonly also comprise some impurities (based, for example, on S, Fe, Mn, Si and/or Al) the level of which may range from 0.2 to 5 wt%, preferably less than 2 wt%, more preferably less than 1 wt% with respect to the total weight of dolime. The impurities notably comprise all those which are encountered in dolomite. Dolime contains generally also some % of residual dolomite or magnesium carbonate, called unburned residues.

According to the invention, the glass batch comprises free water in an amount between 0 and 5 wt%. In other words, it is then clear that the glass batch may not comprise any free water (0 wt%) or that the glass batch may comprise free water from > 0 to 5 wt% in the first embodiment of the invention or between 5.1 wt% and 7 wt% in the second embodiment of the invention.

By "free water" in the invention, it is meant water that is present as such in the glass batch (not in the form of hydroxide groups), as crystalline water and/or as adsorption water and can be water brought by moisturization of the batch and/or water initially contained in some of the glass batch raw materials (e.g. sand). The amount of free water according to the invention corresponds herein to the water content in the composition as measured by loss on ignition (or LOI) at a temperature of 150°C. The free water, if comprised in the composition of the invention, is released below 150°C and the mass loss occuring up to 150°C corresponds therefore to the amount of free water (expressed as H2O) according to the invention.

According to the invention, the glass batch comprises at least one calcium or calcium-magnesium source chosen amongst oxide sources : quicklime and dolime. This means that it may comprise, as calcium or calcium-magnesium oxide source, only quicklime or only dolime or both.

According to the invention, the glass batch comprises optionally at least another calcium or calcium-magnesium source chosen amongst carbonate sources : limestone and dolomite. This means that, if the glass batch comprises at least another calcium or calcium-magnesium source chosen amongst carbonate sources, it may comprise, as calcium or calcium-magnesium carbonate source, only limestone or only dolomite or both. The at least one calcium or calcium-magnesium carbonate source in the invention is optional and has to be added to the glass batch in cases when all Ca and Mg required in the batch are not brought by the at least one calcium or calcium-magnesium oxide source. In other words, the glass batch in the invention does not comprise any calcium or calcium-magnesium carbonate source when all the calcium and/or calcium-magnesium source(s) is/are in the form of oxides.

According to the invention, the step of melting is carried out by heating at least partially with electrical heating means with an electrical input fraction (or EIF) defined as the ratio (electricity input/total energy input at the melting step) in the range 0.05 - 1. The electrical heating means according to the invention are advantageously electrodes (e.g. located at the bottom of the melting zone and immersed).

Whithin the context of the invention, the amount ratio [OS/(OS+CS)] corresponds to the level of replacement of the at least one calcium or calcium-magnesium carbonate source by at least one calcium or calcium-magnesium oxide source. Hence, if [OS/(OS+CS)] is equal to 1, all the calcium and/or calcium-magnesium source(s) that are traditionnally used as raw materials to manufacture glass is/are replaced by oxides in the glass batch (total replacement of carbonate(s)). Preferably, limestone is replaced by quicklime, dolomite is replaced by dolime or both limestone and dolomite are replaced by both quicklime and dolime, in proportions that have to be adjusted to keep the same amounts (numbers of moles) of total Ca and total Mg in the glass batch.

Moreover, if the melting step is carried out with electricity as only source of energy (thereby with an EIF = 1), the level of replacement of Ca/Ca-Mg carbonate(s) by Ca/Ca-Mg oxide(s) is defined by a ratio [OS/(OS+CS)] in the range from 0.45 to 0.69, regardless the amount of free water. This means that, if the melting step is carried out with electricity as only source of energy, the glass batch may have a relatively high moisture (for example, up to 6% or up to 5%), whether it comes from batch moisturizing and/or from natural moisture contained is some used raw materials (e.g. sand).

Next, if the melting step is carried out with electricity and another source of energy (thereby with an EIF < 1), the level of replacement of Ca/Ca-Mg carbonate(s) by Ca/Ca-Mg oxide(s) must be adjusted while taking into account (i) the EIF and (ii) the amount of free water in the glass batch.

In particular with an EIF < 1, if the amount of free water in the batch is below 3 wt%, then [OS/(OS+CS)] must be in the range 0.45 to 0.69.

In particular also, if the amount of free water in the glass batch is equal or above 3%, particularly equal or above 5.1 wt%, in particular between 5.1 wt% and 7 wt%, then the level of replacement of Ca/Ca-Mg carbonate(s) by Ca/Ca-Mg oxide(s) must be adjusted while taking into account the EIF value :
- if 0.7 ≤ EIF < 1, then [OS/(OS+CS)] must be in the range 0.7 to 1;
- if 0.5 ≤ EIF < 0.7, then [OS/(OS+CS)] must be in the range 0.5 to < 0.7 ; and
- if 0.05 ≤ EIF < 0.5, then [OS/(OS+CS)] must be < 0.5.

In the case where the melting step is carried out partially with electricity, or in other words with electricity and another source of energy (EIF < 1), said another source of energy according to the invention may come through combustion of a fuel (e.g. fossil fuel, natural gas, biogas, synthetic gas, hydrogen or mixture thereof) with air, oxygen and/or a gas enriched in oxygen. Combustion may be carried out commonly using burners, for example several burners located along side walls of melting zone and/or in its crown.

According to a preferred embodiment of the invention, said step of melting is carried out by heating with electrical heating means and the EIF being = 1. This means that the melting step is carried out exclusively with electricity. Preferably, according to this embodiment, when the EIF is equal to 1, [OS/(OS+CS)] may be from 0.45 to 0.69.

Preferably also, when the EIF is equal to 1, said glass batch comprises free water in an amount below 0.5 wt%, preferably below 0.3 wt%.

According to an another preferred embodiment of the invention, said step of melting is carried out by heating partially with electrical heating means, the EIF being in the range 0.05 - <1.

This means that the melting step is carried out with electricity (for example, thanks to electrodes) and another source of energy (for example, from combustion). Preferably, according to this embodiment, the EIF is in the range 0.05 - 0.8, or 0.05 - 0.6, or 0.1 - 0.8 or even 0.1 - 0.6.

In a preferred embodiment of the present invention, said step of melting is carried out by heating with electrical and combustion heating means.

According to another embodiment of the invention, said at least one calcium or calcium-magnesium source chosen amongst oxide sources (quicklime, dolime) shows a maximum particule size below or equal to 10 mm, preferably, below or equal to 7 mm or below or equal to 5 mm, or even below or equal to 3 mm. This is advantageaous in order to facilitate melting in the glass bath. By "maximum particle size" in the sense of the invention, it is meant the mesh size of a screen through which more than 97%, preferably more than 98% and more preferably more than 99% of the solid material can pass. The quicklime and/or dolime according to the invention may be natural fines occuring from a kiln or may be crushed or milled.

In particular, the quicklime and/or dolime according to the process of the present invention show(s) a maxium particule size below or equal to 10 mm, preferably, below or equal to 7 mm or even below or equal to 5 mm, or even below or equal to 3 mm.

According to the invention and depending on the targeted glass product (i.e. desired properties in terms of chemical/mechanical resistance, colour, transmission,...), the glass batch comprises other raw materials than calcium and/or calcium-magnesium source(s), like (non-exhaustive list) sand, cullet, salt cake (or sodium sulfate, Na₂SO₄), potash, nephelin, feldspar, boron oxide, barium oxide, coloring agents (cobalt oxide, chromium oxide,...), clarifying agents (cerium oxide,..), oxidizers (sodium nitrate,...), reducing agents (graphite, coke, pyrite,...), decolorizing agents (selenium, cobalt,...).

For example, said glass batch may have the following composition:
- Si (expressed as SiO₂) : 50 - 80 wt%
- Na (expressed as Na₂O) : 1 - 25 wt%
- Ca (expressed as CaO) : 0.5 - 20 wt% Mg (expressed as MgO) : 0 - 15 wt%.

Finally, the invention also relates to the use of quicklime and/or dolime as calcium and/or calcium-magnesium source(s) in a glass furnace to produce glass products with a capacity higher than 250 tons/day and with an EIF in the range 0.05 - 1, preferably with an EIF equal to 1. According to the invention, all the calcium and/or calcium-magnesium source(s) may be in the form of oxide or, alternatively, a part of the calcium and/or calcium-magnesium source(s) is in the form of oxide and the remaining part is in the form of carbonate.

In a preferred embodiment of the invention, said glass products are flat glass or hollow glass products.

It should be understood that the present invention is not limited to the described embodiments and that variations can be applied without going outside of the scope of the claims. It is further noted that the invention relates to all possible combinations of features, and preferred features, described herein and recited in the claims.

## Claims

1. Glass manufacturing process comprising steps of melting a glass batch and fining a glass melt in a glass furnace, said step of melting being carried out by heating at least partially with electrical heating means with an electrical input fraction EIF defined as the ratio (electricity input/total energy input at the melting step) in the range 0.05 - 1; said glass batch comprising:
- at least one calcium or calcium-magnesium source chosen amongst oxide sources : quicklime and dolime;
- optionally, at least another calcium or calcium-magnesium source chosen amongst carbonate sources : limestone and dolomite;
- free water in an amount between 0 and 5 wt%;
**characterized in that** said process produces glass products with a capacity higher than 250 tons/day, and that the amount ratio [OS/(OS+CS)] in said glass batch is adjusted based on the electrical input fraction in the melting step and on the amount of free water in said glass batch, as follows :
- if EIF = 1 : [OS/(OS+CS)] is from 0.45 to 0.69 ;
- if EIF < 1 and FW < 3 wt% : [OS/(OS+CS)] is from 0.45 to 0.69 ;
with OS being the weight amount of said oxide source(s) in said glass batch, CS being the weight amount of said carbonate source(s) in said glass batch and FW being the weight amount of free water in said glass batch.

2. Process according to claim 1, **characterized in that** the amount ratio [OS/(OS+CS)] in the glass batch is adjusted based on the electrical input fraction at the melting step and on the amount of free water in said glass batch, as follows :
- if EIF = 1 : [OS/(OS+CS)] is chosen in the group comprising 0.46, 0.47, 0.48, 0.49, 0.50, 0.51, 0.52, 0.53, 0.54, 0.55, 0.56, 0.57, 0.58, 0.59, 0.60, 0.61, 0.62, 0.63, 0.64, 0.65, 0.66, 0.67 and 0.68.

3. Process according to claim 1, **characterized in that** the amount ratio [OS/(OS+CS)] in the glass batch is adjusted based on the electrical input fraction at the melting step and on the amount of free water in said glass batch, as follows :
- if EIF < 1 and FW < 3 wt% : [OS/(OS+CS)] is chosen in the group comprising 0.46, 0.47, 0.48, 0.49, 0.50, 0.51, 0.52, 0.53, 0.54, 0.55, 0.56, 0.57, 0.58, 0.59, 0.60, 0.61, 0.62, 0.63, 0.64, 0.65, 0.66, 0.67 and 0.68.

4. Process according to claim 1 to 3, **characterized in that** said glass batch comprises free water (FW) in an amount below 0.5 wt%, preferably below 0.3 wt%.

5. Glass manufacturing process comprising steps of melting a glass batch and fining a glass melt in a glass furnace, said step of melting being carried out by heating at least partially with electrical heating means with an electrical input fraction EIF defined as the ratio (electricity input/total energy input at the melting step) in the range 0.05 - 1; said glass batch comprising:
- at least one calcium or calcium-magnesium source chosen amongst oxide sources : quicklime and dolime;
- optionally, at least another calcium or calcium-magnesium source chosen amongst carbonate sources : limestone and dolomite;
- free water in an amount between 5.1 wt% and 7 wt%;
**characterized in that** said process produces glass products with a capacity higher than 250 tons/day, and that the amount ratio [OS/(OS+CS)] in said glass batch is adjusted based on the electrical input fraction in the melting step and on the amount of free water in said glass batch, as follows :
- if 0.7 ≤ EIF < 1 and FW ≥ 5.1 wt% : [OS/(OS+CS)] is from 0.7 to 1;
- if 0.5 ≤ EIF < 0.7 and FW ≥ 5.1 wt% : [OS/(OS+CS)] is from 0.5 to < 0.7 ;
- if 0.05 ≤ EIF < 0.5 and FW ≥ 5.1 wt% : [OS/(OS+CS)] is < 0.5,
with OS being the weight amount of said oxide source(s) in said glass batch, CS being the weight amount of said carbonate source(s) in said glass batch and FW being the weight amount of free water in said glass batch.

6. Process according to claim 5, **characterized in that** said free water (FW) in said glass batch is in an amount chosen in the group comprising 5.2 wt%, 5.3 wt%, 5.4 wt%, 5.5 wt%, 5.6 wt%, 5.7 wt%, 5.8 wt%, 5.9 wt%, 6.0 wt%, 6.1 wt%, 6.2 wt%, 6.3 wt%, 6.4 wt%, 6.5 wt%, 6.6 wt%, 6.7 wt%, 6.8 wt% and 6.9 wt%.

7. Process according to any of the claim 5 or 6, **characterized in that** the amount ratio [OS/(OS+CS)] in the glass batch is adjusted based on the electrical input fraction at the melting step and on the amount of free water in said glass batch, as follows :
- if 0.7 ≤ EIF < 1 and FW ≥ 5.1 wt% : [OS/(OS+CS)] is from 0.8 to 1;
- if 0.5 ≤ EIF < 0.7 and FW ≥ 5.1 wt% : [OS/(OS+CS)] is from 0.6 to < 0.7 ; and
- if 0.05 ≤ EIF < 0.5 and FW ≥ 5.1 wt% : [OS/(OS+CS)] is from 0.3 to < 0.5.

8. Process according to the preceding claim 7, **characterized in that** the amount ratio [OS/(OS+CS)] in the glass batch is adjusted based on the electrical input fraction at the melting step and on the amount of free water in said glass batch, as follows :if 0.7 ≤ EIF < 1 and FW ≥ 5.1 wt% : [OS/(OS+CS)] is from 0.9 to 1;
- if 0.5 ≤ EIF < 0.7 and FW ≥ 5.1 wt% : [OS/(OS+CS)] is from from 0.65 to < 0.7; and
- if 0.05 ≤ EIF < 0.5 and FW ≥ 5.1 wt% : [OS/(OS+CS)] is from 0.4 to < 0.5.

9. Process according to any of the preceding claims, **characterized in that** it produces glass products with a capacity higher than 300 tons/day, in particular higher than 350 tons/day, preferably higher than 380 tons/day, preferably higher than 400 tons/day, even more preferably higher than 430 tons/day, in particular higher than 450 tons/day, advantageously higher than 480 tons/day, more particular higher than 500 tons/day.

10. Process according to any of claims 1 to 9, **characterized in that** said step of melting is carried out by heating partially with electrical heating means, said EIF being in the range 0.05 - <1.

11. Process according to preceding claim 10, **characterized in that** said step of melting is carried out by heating with electrical and combustion heating means.

12. Process according to claims 10 and 11, **characterized in that** the EIF is in the range 0.05 - 0.8, preferably in the range 0.1- 0.6.

13. Process according to any of the preceding claims, **characterized in that** the quicklime and/or dolime show(s) a maxium particule size below or equal to 10 mm, preferably, below or equal to 7 mm or even below or equal to 5 mm, or even below or equal to 3 mm.

14. Process according to any of the preceding claims, **characterized in that** said glass batch has the following composition :
- Si (expressed as SiO₂) : 50 - 80 wt%
- Na (expressed as Na₂O) : 1 - 25 wt%
- Ca (expressed as CaO) : 0.5 - 20 wt%
- Mg (expressed as MgO) : 0 - 15 wt%.

15. Process according to any of the preceding claims, **characterized in that** said glass products are flat glass or hollow glass products.
